# FASCICULE DE BREVET EUROPEEN

(11) **EP 0 376 191 B1**
(45) Date de publication et mention de la délivrance du brevet: **30.11.1994**
(21) Numéro de dépôt: 89123760.4
(22) Date de dépôt: 22.12.1989
(51) Int. Cl.: H02J 9/06

(54) **Commutateur d'alimentation pour appareillage électrique et appareillage terminal de téléaction doté d'un tel commutateur**
Lastschalter für Elektrogeräte und Endgerät eines mit einem solchen Schalter versehenen Fernwirksystems
Power supply switch for electrical equipment, and remote control terminal apparatus provided with such a switch

(30) Priorité: 26.12.1988 FR 8817183
(43) Date de publication de la demande: 04.07.1990
(73) Titulaire: ALCATEL CIT, 75008 Paris (FR)
(72) Inventeur: Marquet, Alain, F-91510 Lardy (FR); Tanguy, Jacques, F-92160 Antony (FR)
(74) Mandataire: Weinmiller, Jürgen

(56) Documents cités:
- EP-A- 0 225 231
- DE-A- 3 333 791
- US-A- 4 354 118
- US-A- 4 779 007
- ELECTRONIC ENGINEERING. vol. 51, no. 624, juin 1979, LONDON GB T. AUSTIN: "No-break battery back-up with automatic shut-off"

## Description

L'invention concerne un commutateur d'alimentation pour appareillage électrique associant un accumulateur à une autre source d'énergie électrique que cet accumulateur est apte à temporairement remplacer ou interfacer, ainsi que les appareillages terminaux de téléaction dotés d'un tel commutateur.

Bon nombre d'appareillages électriques sont munis d'une alimentation auxiliaire ou principale fonctionnant à partir d'un accumulateur, souvent interne à l'appareillage, qui est susceptible d'être rechargé par une source d'énergie électrique externe.

Tels sont les appareillages électriques dont l'alimentation, normalement assurée par une source d'énergie externe, de type réseau de distribution, est temporairement réalisée à partir d'un accumulateur en cas de défaillance de la source normale externe.

Un commutateur d'alimentation pour un appareillage de ce genre est décrit dans le document DE-A-3333791; il est prévu pour permettre d'alimenter en secours par l'intermédiaire du réseau téléphonique un appareil téléphonique normalement alimenté par un réseau de distribution d'énergie, lorsque ce réseau est défaillant.

Tels sont encore les appareillages électriques, souvent portatifs, qui sont alimentés par des accumulateurs que l'on vient recharger par raccordement à une source d'énergie externe à ces appareillages, lorsque ceux-ci sont au repos. Dans de nombreux appareillages, le commutateur d'alimentation permet de déconnecter l'accumulateur de secours de l'agencement qu'il alimente avant que cet accumulateur ne soit totalement déchargé, afin d'éviter un fonctionnement de l'appareillage et de l'accumulateur dans de mauvaises conditions qui peuvent conduire à des fautes au niveau de l'appareillage et à une détérioration de l'accumulateur.

Une solution connue consiste à mesurer la tension aux bornes de l'accumulateur et à déconnecter ce dernier, lorsque cette tension chute au delà d'un seuil déterminé. Toutefois la tension aux bornes d'un accumulateur, notamment de type cadmium-nickel, tend à remonter, lorsque l'accumulateur est déconnecté de la charge qu'il alimentait auparavant.

Sans précaution, il risque donc de se produire une succession de connexions et de déconnexions de l'accumulateur au voisinage du seuil de mise hors-circuit choisi et en conséquence il y a possibilité de détérioration et d'apparition de fautes.

Un commutateur d'alimentation permettant d'éliminer ces inconvénients est décrit dans le document US-A-4354118, il prévoit d'alimenter l'appareil qui le comporte par la batterie de secours au travers d'un transistor de commutation maintenu bloqué par l'alimentation normale tant que celle-ci est présente. Un seuil de tension déterminé au moyen d'une diode Zener permet de contrôler la suffisance de la tension d'alimentation de l'appareil mesurée en aval du transistor de commutation au point d'alimentation positif commun à l'alimentation normale et à l'accumulateur. Le transistor de commutation est mis à l'état bloquant, par action d'un autre transistor dès que la tension d'alimentation mesurée devient inférieure à la valeur de seuil et il ne peut être remis en un état passant que suite à une nouvelle phase d'activité de l'alimentation normale, dans la mesure où ledit autre transistor prélève l'énergie nécessaire à sa commande au point commun à l'alimentation normale et de secours, en aval du transistor de commutation. De tels commutateurs présentent l'inconvénient de ne pas éliminer totalement les risques de microcoupures lors des basculements d'alimentation.

L'invention propose donc un commutateur d'alimentation pour appareillage électrique associant, en une alimentation, un accumulateur et une autre source d'énergie électrique que cet accumulateur est apte à temporairement remplacer ou interfacer, dans une réalisation simple et qui ne présente pas les inconvénients évoqués ci-dessus.

Ce commutateur est défini par la revendication 1. En ce qui concerne un exemple d'application préférée de ce commutateur, référence est faite aux revendications dépendantes.

L'invention ses caractéristiques et ses avantages sont précisés dans la description qui suit en liaison avec les figures répertoriées ci-dessous.

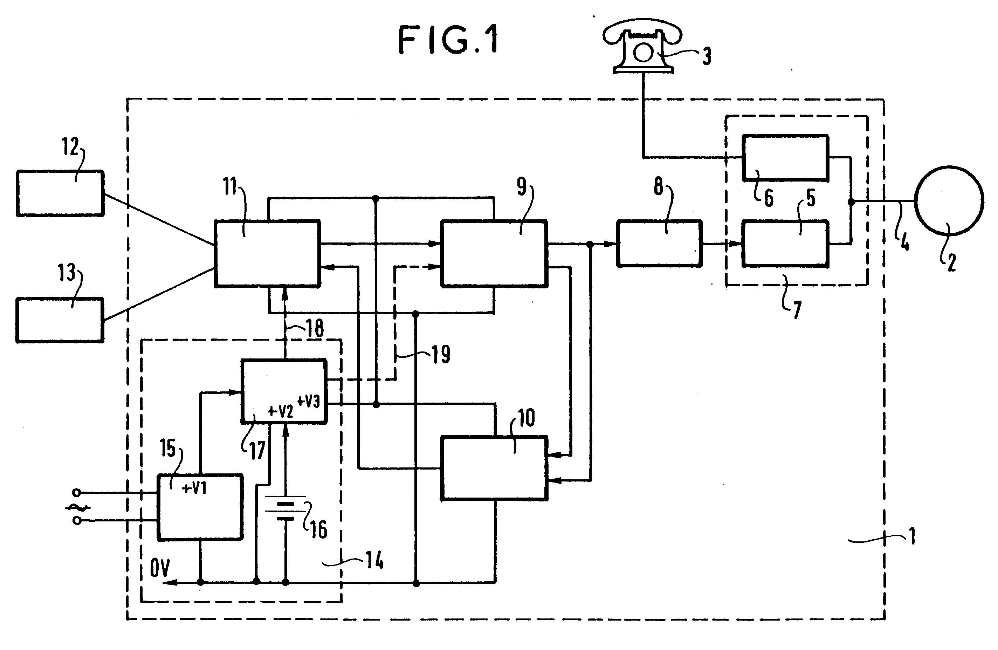

La figure 1 présente un schéma de principe d'un appareillage terminal de téléaction.

La figure 2 présente un exemple de commutateur d'alimentation selon l'invention.

De manière connue la téléaction couvre un ensemble d'applications diverses, telles que la télésurveillance, la télécommande, la télémesure, la télégestion, dans lesquelles ont lieu des échanges bidirectionnels de messages courts entre des appareillages terminaux et des serveurs spécialisés, reliés entre eux par un ou des réseaux mono ou préférablement multiservices.

Un appareillage de téléaction est par exemple destiné à être raccordé à un réseau téléphonique et de téléservice 2 en parallèle avec un poste téléphonique 3 sur une liaison 4 qui est utilisée en bande basse par le téléphone et dans une bande dite supraphonique par l'appareillage terminal 1 pour ses liaisons avec un ou des serveurs, eux-mêmes raccordés de manière connue en soi au réseau 2 et non représentés ici.

Deux filtres 5, 6 d'un coupleur 7 permettent classiquement de séparer les signaux de communication concernant le poste téléphonique 3 de ceux concernant l'appareillage terminal 1, ils sont ici présentés incorporés dans ce dernier, sans que cela soit indispensable. Le filtre 5 desservant l'appareillage terminal est ici montré connecté à un filtre passe bande 8 dont la fréquence centrale FC est par exemple choisie à mi-chemin entre deux fréquences F1 et F2 exploitées pour transmettre des signaux de communication sous forme binaire à partir du terminal, les fréquences F1 et F2 étant par exemple respectivement égales à 52,3 kHz et 57,6 kHz.

Les signaux de communication échangés entre l'appareillage terminal 1 et le réseau 2 sont produits par un classique émetteur 9 et reçus par un classique récepteur 10 dans cet appareillage terminal. L'émetteur 9 reçoit des signaux numériques fournis par une logiques de traitement 11 à partir des informations fournies par des capteurs 12 ou des actionneurs 13 et les transforme en signaux transmis en mode bifréquentiel à l'aide des fréquences F1 et F2.

La logique de traitement est susceptible d'être un simple automate ou encore une unité à microprocesseur et mémoires dûment programmée. Les capteurs 12 et les actionneurs 13 sont susceptibles d'être de tous types analogiques ou numériques.

Le récepteur 10 transpose sous forme de signaux logiques binaires les signaux fréquentiels transmis par le réseau 2 à destination de l'appareillage terminal 1.

Les équipements de cet appareillage 1, notamment la logique de traitement 11, l'émetteur 9 et le récepteur 10, sont électriquement alimentés par une alimentation 14 usuellement secourue qui dans l'exemple proposé fournit une tension d'alimention référencée +V3 à partir d'un générateur principal 15 ou d'un accumulateur de secours 16, par exemple de type cadmium-nickel. L'accumulateur 16 peut être chargé par un circuit, non représenté, alimenté à partir du générateur principal 15.

Le générateur principal 15 est par exemple un redresseur à diodes alimenté à partir d'un réseau de distribution en courant alternatif et associé à un abaisseur de tension qui ne sont pas représentés ici ; il fournit une tension continue à un commutateur d'alimentation 17, cette tension est référencée +V1 par rapport à un potentiel de référence OV.

Le commutateur 17 qui est par ailleurs relié au potentiel de référence OV se voit également appliquer une tension référencée +V2 par rapport à ce potentiel OV par l'accumulateur 16, il fournit la tension d'alimentation +V3 à partir de la tension +V1 fournie par le générateur principal 15 si celui-ci est actif ou à partir de la tension +V2 fournie par l'accumulateur 16 en cas de défaillance du générateur principal.

Des signaux d'information sont susceptibles d'être émis par l'appareillage terminal 1, via la liaison 4, en cas de défaillance affectant le générateur principal 15 et/ou l'accumulateur 16 par exemple via le commutateur 17 relié à l'émetteur 9 soit directement, soit via la logique de traitement 11, comme le symbolisent les liaisons en tireté 18 et 19.

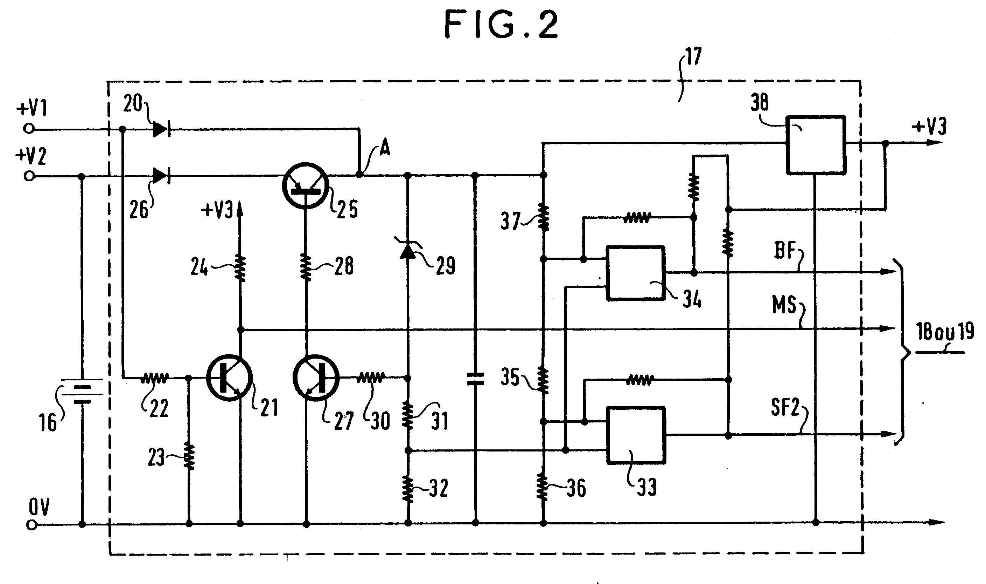

Le commutateur d'alimentation 17 est détaillé en figure 2. Bien que présenté en liaison avec un appareillage terminal de téléaction, il est susceptible d'être mis en oeuvre dans de nombreux appareillages électriques destinés à être alimentés à partir d'un accumulateur apte à se substituer à une autre source d'alimentation en énergie électrique et/ou à être rechargé par une telle autre source d'énergie, comme indiqué dans le préambule de la présente demande.

A cet effet, le commutateur d'alimentation 17 est relié aux potentiels OV, +V1, +V2, +V3.

Le potentiel +V1 fourni par le générateur principal 15 est appliqué d'une part à l'anode d'une diode 20, d'autre part à la base d'un transistor 21, de type NPN, via une résistance 22. Ce transistor 21, dont la base est polarisée par une résistance 23 reliée au potentiel OV, est relié par son espace collecteur-émetteur d'une part au potentiel d'alimentation +V3 par une résistance 24, d'autre part au potentiel OV, de manière à fournir un signal MS caractéristique du fonctionnement ou non du générateur principal 15, à destination de l'émetteur 9, via celle des liaisons 18 ou 19 qui est implantée. Le signal MS est prélevé au niveau du collecteur du transistor 21 qui passe du potentiel OV au potentiel +V3 suivant que l'appareillage terminal est alimenté par le générateur principal 15 ou non.

Le potentiel +V2 fourni par l'accumulateur 16 est appliqué à l'émetteur d'un transistor de commutation 25, de type PNP, via une diode 26 ; ce transistor 25 a son collecteur relié en un point A à la cathode de la diode 20 et sa base contrôlée par un transistor 27, de type NPN, via une résistance 28 reliée au collecteur de ce dernier, dont l'émetteur est relié au potentiel OV.

La base du transistor 27 est reliée au point A et donc à la cathode de la diode 20 par une diode Zener 29 et une résistance 30 ; le point commun à l'anode de la diode Zener 29 et à la résistance 30 est relié au potentiel OV par deux résistances 31, 32 en série.

De ce fait, lorsque le générateur principal 15 est actif, il fournit un potentiel +V1 au commutateur d'alimentation 17 qui produit ici le potentiel V3 d'alimentation de l'appareillage, par exemple par l'intermédiaire d'un classique régulateur 38 connecté en A. Une signalisation est fournie par le transistor 21, dans l'exemple proposé elle est envoyée à l'émetteur 9 de l'appareillage. Le transistor 25 a son collecteur porté au potentiel positif +V1 qui polarise en inverse la diode Zener 29, le transistor 27 est rendu passant, l'accumulateur 16 ne débite pas dans la mesure où le potentiel +V1 est supérieur au potentiel +V2, ce qui entraîne le blocage de la diode 26.

La disparition du potentiel +V1, par exemple lorsque le générateur principal 15 n'est plus alimenté, n'entraîne pas de rupture d'alimentation dans la mesure où l'accumulateur 16 est suffisamment chargé, ce dernier se substituant au générateur principal 15 en fournissant le potentiel +V2, via le transistor 25 maintenu à l'état passant.

Dans l'exemple de réalisation proposé ici, un contrôle de la tension de l'accumulateur 16 est réalisé à partir du pont diviseur que forment les résistances 31 et 32, en série avec la diode Zener 29.

A cet effet, le point commun aux résistances 31, 32 est relié à une entrée commune à deux comparateurs 33 et 34, la tension entre ce point commun et le point A, qui est pratiquement fixée par la diode 29, sert de tension de référence pour les deux comparateurs. Les secondes entrées respectives de ces derniers sont reliées chacune à l'une des bornes d'une résistance 35 reliée d'une part par une de ses bornes au potentiel OV par une résistance 36, d'autre part par son autre borne au point A par une résistance 37. Les deux comparateurs 33 et 34 fournissent chacun une indication différente de seuil de tension, sous forme binaire ; ces indications respectivement référencées SF2 et BF sont établies pour deux valeurs prédéterminées fixées l'une par les résistances 35 et 37 en série relativement à l'ensemble des trois résistances 35, 36 et 37 en série et l'autre par la résistance 37 relativement à ce même ensemble de résistances.

Lorsque la tension aux bornes de l'accumulateur 16 atteint une valeur minimale admissible qui est inférieure aux seuils respectivement fixés par les comparateurs 33 et 34 et pour laquelle la diode Zener 29 n'est plus en état de conduction inverse, cette dernière n'alimente plus le pont série de résistances 31, 32. La diode Zener 29 est choisie de manière à conduire en inverse pour une tension appliquée en inverse qui est supérieure à la valeur minimale de tension d'accumulateur admise dans l'application choisie. Le transistor de commutation 25 se bloque, mettant hors-circuit l'accumulateur 16. Le point A est relié au potentiel OV par les résistances 35, 36, 37 en série et se retrouve donc à ce potentiel tant que le générateur principal 15 n'est pas réactivé.

L'éventuelle remontée en tension de l'accumulateur 16 qui serait due à sa mise hors-circuit reste sans effet sur l'appareillage en raison de l'état bloqué du transistor 25.

Ceci permet donc d'éviter la décharge totale de l'accumulateur 16 par mise en et hors service répétitives et d'empêcher le fonctionnement de l'appareillage dans des conditions incorrectes lorsque l'alimentation ne peut être assurée de manière satisfaisante. Dans l'exemple proposé, la double signalisation par l'intermédiaire des comparateurs 33 et 34 et celle déclenchée par le transistor 21, permettent à l'appareillage 1 d'émettre successivement des signaux d'état vers un serveur distant qui puisse par exemple déterminer si une éventuelle rupture de communication est due à l'appareillage ou à la liaison, ce qui peut être particulièrement important dans certaines applications de téléaction.

Bien entendu, il est possible dans une variante de réalisation de prévoir un organe commutateur supplémentaire, non figuré, manuel ou télécommandé, pour permettre la mise sous tension de l'appareillage à partir de l'accumulateur 16, en l'absence d'alimentation fournie par le générateur principal, si cela est jugé nécessaire.

## Revendications

1. Commutateur d'alimentation (17) pour appareillage électrique (1) associant, en une alimentation, un accumulateur (16) et une autre source d'énergie électrique (15) que cet accumulateur est apte à temporairement remplacer ou interfacer, comportant une diode (26) et un transistor de commutation (25) en série entre une borne de l'accumulateur (16) et une borne de l'alimentation (A) pour mettre l'accumulateur en ou hors service en le reliant ou non à cette borne d'alimentation (A) de l'appareillage à laquelle est connectée l'autre source, et des moyens de commande (27, 29) aptes à mettre alternativement le transistor de commutation (25) en un état passant ou en un état bloqué, caractérisé en ce que lesdits moyens de commande (27, 29) sont sensibles à la tension d'alimentation présente au niveau de la borne d'alimentation (A) et commandent ledit transistor de commutation (25) dans son état passant tant que la tension à la borne d'alimentation (A) est supérieure à une tension de référence fonction de la tension minimale admise aux bornes de l'accumulateur pour l'alimentation de l'appareillage considéré, ladite diode (26) se bloquant, dans l'état actif de l'autre source d'énergie électrique (15), tant que la tension présente au niveau de la borne d'alimentation (A) est supérieure à celle fournie par l'accumulateur, et en ce que les moyens de commande comportent un transistor de commande (27) qui agit sur la base du transistor de commutation et dont la base est polarisée par un agencement résistif (31, 32) relié d'une part à la borne d'alimentation (A) et d'autre part à une seconde borne (0V) commune à l'accumulateur et ladite autre source, ainsi qu'une diode Zener (29) insérée entre la borne d'alimentation (A) et le point commun à l'agencement résistif (31, 32) et à la base du transistor de commande (27).

2. Appareillage terminal de téléaction qui est destiné à être contrôlé à distance à travers un réseau de communication (2) auquel il est relié par un émetteur (9) et un récepteur (10) et qui est alimenté par l'intermédiaire d'un commutateur selon la revendication 1.

3. Appareillage terminal de téléaction selon la revendication 2, caractérisé en ce qu'il y a des moyens de signalisation comportant un transistor de signalisation (21) déclenché par la tension d'alimentation fournie par ladite autre source (15) et fournissant une signalisation de type binaire au niveau de son collecteur, pour être émise par ledit réseau (2).

4. Appareillage terminal de téléaction selon la revendication 3, caractérisé en ce qu'il comporte au moins un comparateur (33) fournissant un signal, de type binaire, fonction de la valeur de la tension d'alimentation fournie à l'appareillage par rapport à une tension de référence prédéterminée.

## Patentansprüche

1. Power supply switchover means (17) for electrical apparatus (1) that associates, in a power supply, a storage battery (16) and another source (15) of electrical power which the storage battery is adapted to temporarily replace or interface, including a diode (26) and a switching transistor (25) in series between a terminal of the storage battery (16) and a terminal (A) of the power supply for putting the storage battery into and out of service by connecting or not connecting it to said power supply terminal (A) of the apparatus to which the other source of power is connected, and control means (27, 29) adapted to turn the switching transistor (25) alternately on and off, characterised in that said control means (27, 29) are responsive to the supply voltage present at said supply terminal (A) and turn on said switching transistor (25) if the voltage at the supply terminal (A) is greater than a reference voltage that is a function of the minimum voltage acceptable at the terminals of the storage battery for supplying the relevant apparatus, said diode (26) being turned off when the other electrical power supply (15) is active if the voltage present at the supply terminal (A) is greater than the voltage supplied by the storage battery, and in that the control means include a switching transistor (27) acting on the base of the switching transistor, the base of said control transistor being biased by a resistive arrangement (31, 32) connected to the supply terminal (A) and to a second terminal (0 V) common to the storage battery and said other source, and a Zener diode (29) inserted between the supply terminal (A) and the point that is common to the resistor arrangement (31, 32) and to the base of the control transistor (27).

2. Teleaction terminal equipment adapted to be remotely controlled via a communications network (2) to which it is connected by a transmitter (9) and a receiver (10) and which is powered through a power supply switchover means as claimed in claim 1.

3. Teleaction terminal equipment as claimed in claim 2 characterised by signalling means including a signalling transistor (21) triggered by the supply voltage furnished by said other source (15) and supplying binary-type signalling at its collector to be sent via said network (2).

4. Teleaction terminal equipment according to claim 3 characterised in that it includes at least one comparator (33) supplying a binary-type output signal that is a function of the value of the supply voltage furnished to said equipment with respect to a predetermined reference voltage.

## Claims

1. Stromversorgungsschalter (17) für ein elektrisches Gerät, das in einer Stromversorgung einen Akkumulator (16) und eine weitere elektrische Energiequelle (15) vereinigt, die der Akkumulator zeitweilig ersetzen kann oder der er schnittstellenmäßig vorgeschaltet ist, wobei der Schalter eine Diode (26) und einen Schalttransistor (25), die in Reihe zwischen eine Klemme des Akkumulators (16) und eine Stromversorgungsklemme (A) geschaltet sind, um den Akkumulator in oder außer Betrieb zu setzen, indem er an die auch noch an eine andere Quelle angeschlossene Stromversorgungsklemme (A) angeschlossen wird oder von dieser abgetrennt wird, und Steuermittel (27, 29) aufweist, die in der Lage sind, den Schalttransistor (25) alternativ in einen leitenden Zustand oder in einen gesperrten Zustand zu versetzen, dadurch gekennzeichnet, daß die Steuermittel (27, 29) auf die an der Versorgungsklemme (A) liegende Versorgungsspannung ansprechen und den Schalttransistor (25) in seinen leitenden Zustand versetzen, solange die Spannung an der Versorgungsklemme (A) größer als eine Bezugsspannung ist, die von der an den Klemmen des Akkumulators zur Speisung des betrachteten Geräts zulässigen Minimalspannung abhängt, wobei sich die Diode (26) von selbst sperrt, wenn die andere elektrische Energiequelle (15) aktiv ist, solange die an der Versorgungsklemme (A) liegende Spannung größer als die vom Akkumulator gelieferte Spannung ist, und daß die Steuermittel einen Steuertransistor (27), der auf die Basis des Schalttransistors einwirkt und dessen Basis durch eine Widerstandsschaltung (31, 32) vorgespannt wird, die einerseits an die Stromversorgungsklemme (A) und andererseits an eine zweite Klemme (OV) angeschlossen ist, die dem Akkumulator und der anderen Quelle gemeinsam ist, und eine Zener-Diode (29) aufweisen, die zwischen die Stromversorgungsklemme (A) und den der Widerstandsschaltung (31, 32) und der Basis des Steuertransistors (27) gemeinsamen Punkt geschaltet ist.

2. Fernwirk-Endgerät, das aus der Ferne über ein Nachrichtennetz (2) überwacht wird, mit dem es über einen Sender (9) und einen Empfänger (10) verbunden ist und das durch einen Schalter gemäß Anspruch 1 gespeist wird.

3. Fernwirk-Endgerät nach Anspruch 2, dadurch gekennzeichnet, daß Signalisationsmittel vorgesehen sind, die einen Signalisationstransistor (21) aufweisen, der durch die von der anderen Quelle (15) gelieferte Versorgungsspannung ausgelöst wird und kollektorseitig ein binäres Signal liefert, das über das Netz (2) ausgesendet wird.

4. Fernwirk-Endgerät nach Anspruch 3, dadurch gekennzeichnet, daß es mindestens einen Komparator (33) aufweist, der ein Binärsignal liefert, das vom Wert der an das Gerät gelieferten Speisespannung relativ zu einer vorbestimmten Bezugsspannung abhängt.
